(19)

Europäisches Patentamt

European Patent Office

Office européen des brevets

(11) **EP 2 724 510 B1**

(12) **EUROPEAN PATENT SPECIFICATION**

(45) Date of publication and mention of the grant of the patent:
**21.03.2018 Bulletin 2018/12**

(21) Application number: **12738416.2**

(22) Date of filing: **22.06.2012**

(51) Int Cl.:
***H04L 29/06*** *(2006.01)*

(86) International application number:
**PCT/EP2012/062081**

(87) International publication number:
**WO 2012/175667 (27.12.2012 Gazette 2012/52)**

(54) **METHOD AND SYSTEM FOR PERFORMING SINGLE SIGN-IN USER AUTHENTICATION**

VERFAHREN UND SYSTEM ZUR DURCHFÜHRUNG VON SINGLE-SIGN-IN-BENUTZERAUTHENTIFIZIERUNG

PROCÉDÉ ET SYSTÈME POUR EXÉCUTER UNE AUTHENTIFICATION PAR SIGNATURE UNIQUE D'UN UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.06.2011 EP 11005090**

(43) Date of publication of application:
**30.04.2014 Bulletin 2014/18**

(73) Proprietor: **NEC CORPORATION**
**Minato-ku, Tokyo 108-8001 (JP)**

(72) Inventors:
• **QUINTINO KUHNEN, Marcus**
**64653 Lorsch (DE)**
• **GÓMEZ MÁRMOL, Félix**
**69117 Heidelberg (DE)**

(74) Representative: **Patent- und Rechtsanwälte Ullrich & Naumann**
**PartG mbB**
**Schneidmühlstrasse 21**
**69115 Heidelberg (DE)**

(56) References cited:
**WO-A1-2011/050967    US-B1- 7 831 522**

• **Nomura Research Institute: "OpenID RP Reputation in Trusted Exchange", , June 2008 (2008-06), XP002683598, Retrieved from the Internet:**
**URL:https://lists.oasis-open.org/archives/ orms/200806/ppt00000.ppt [retrieved on 2012-09-17]**

**Description**

The present invention relates to a method and system for performing single sign-in user authentication, comprising a number of relying parties that offer particular services, users being enabled to request access to a service offered by a relying party, and a number of authentication entities performing authentication of a user's identity towards a relying party, wherein said authentication entities provide a user, within the framework of an authentication process towards a relying party, with reputation information about said relying party.

OpenID, which is the most prominent representative of single sign-in systems, is an open standard that describes how users can be authenticated in a user centric manner (see http://www.openid.net). It is based on well-know existing internet technologies (URI, HTTP, SSL, Diffie-Hellman), and it is clearly oriented to be used in web scenarios. The OpenID protocol does not rely on a central authority to authenticate a user's identity. Instead, it is a user-centric framework, which means that users can decide which identity provider they trust the most to authenticate them.

A basic glossary of the terms used with OpenID is the following one:

- **User** or **end-user:** The entity that wants to assert a particular identity.
- **Identifier** or **OpenID:** The URL or XRI chosen by the end-user to name the end-user's identity (for instance, http://felixgm.myopenid.com).
- **Identity provider** or **OpenID provider** (**IdP** or **OP**): A service that specializes in registering OpenID URLs or XRIs and providing OpenID authentication (and possibly other identity services).
- **Relying party** (**RP** or **SP**): The site that wants to verify the end-user's identifier; other terms include *"service provider"* or the now obsolete *"consumer".*

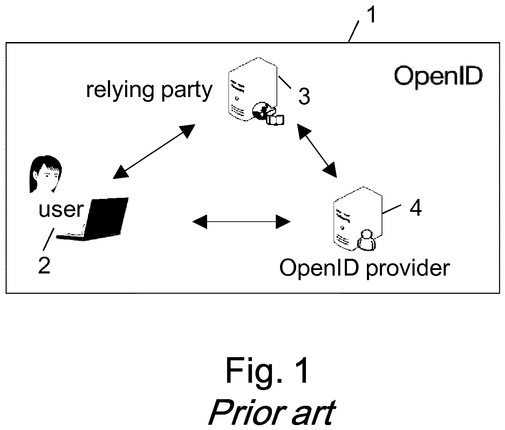

Fig. 1 depicts an overview of a typical OpenID system 1 and illustrates how the OpenID protocol works. Let's say a user 2, hereinafter denoted Alice, wants to watch a film online, so she accesses the service provider - relying party RP 3 - that offers such service. The film that Alice wants to watch contains explicit violent scenes and she must prove she is an adult in order to get access to it.

Then, instead of registering and creating a new account in such RP 3, Alice wants to use her existing OpenID already registered in a certain OpenID provider OP 4. Thus, Alice is redirected to the OP 4 she has indicated and logs in. Then, the RP 3 has access to Alice's identity information stored in the specified OP 4 (like for instance, age, e-mail, credit card, etc) and, after checking she is an adult, the RP 3 actually provides the requested film.

Beyond controversy, OpenID is beneficial in many aspects, in particular in terms of simplifying a user's management of different accounts. Nevertheless, despite its several advantages, based on a market survey, 97% of the users today in the Internet would appreciate being assisted with respect to assessing the trustworthiness of relying parties that offer services that they use (see for reference Nat Sakimura, "Coping with Information Asymmetry", Identity Management Conference, SESSION G: Managing Risk & Reducing Online Fraud Using New Security Technologies, Washington, US, 27-28 September 2010. In this regard users wish to get answers to questions like: "Is the service that I'm going to use reliable?", or "Is the service that I'm going to use now going to spam me or is the relying party a source of spam?", or "Is it going to use my credit card number to perform fraudulent actions?" In summary, can the user trust this relying party?

The document of Nomura Research Institute "OpenID RP Reputation in Trusted Exchange", June 6, 2008, discloses an OpenID based user authentication scheme that includes a reputation service from which OpenID providers (OPs) can retrieve reputation scores of relying parties that have registered themselves at the reputation service.

US 7,831,522 B1 relates to evaluating relying parties and discloses a method for determining reputation information. A honey token, which is included in an online identity data, is to monitor for misuse of all or part of the online identity data. For instance, a user may communicate with various sites in a network, e.g. electronic commerce sites. An agent acting on behalf of the user interacts with relying parties and identity providers and informs the user about the reputations of various sites in the network and facilitates the insertion of honey tokens into information relayed to relying parties.

WO 2011/050967 A1 discloses a method for supporting a reputation mechanism in a network that includes one or more domains with users being connected to the domains, Identity Providers that manage identity information on behalf of the users, and an entity that functions as Web Service Consumer for the users. In case a user requests a Web Service Consumer of a domain for a web service provided by a Web Service Provider, the requested Web Service Consumer requests its known Identity Providers regarding a recommendation of the Web Service Provider, wherein the Identity Providers function as recommendation aggregators by collecting reputation assessments of the Web Service Provider from entities being registered on the Identity Providers and by returning an aggregated recommendation to the requested Web Service Consumer.

In view of the above it is an object of the present invention to improve and further develop a method and a system of the initially described type for performing single sign-in user authentication in such a way that the efficiency of the provision of reputation information and thus the user experience in terms of security-related aspects is improved.

In accordance with the invention, the aforementioned object is accomplished by a method comprising the features of claim 1. According to this claim, such a method is characterized in that a relying party keeps a list of potential recommenders that includes authentication entities said relying party had an interaction with in the past, wherein said relying party provides said list of potential recommenders to authentication entities.

Furthermore, the aforementioned object is accomplished by a system comprising the features of claim 10. According to this claim, such a system is characterized in that relying parties are configured to keep a list of potential recommenders that includes authentication entities said relying party had an interaction with in the past, wherein said relying party is configured to provide said list of potential recommenders to authentication entities.

According to the invention it has first been recognized that the user experience in terms of security-related aspects can be significantly improved by the provision of reputation information about a relying party, e.g. a service provider, at authentication time. It is the authentication entity as trusted third party, e.g. the OpenID provider, that is configured as source of reputation information. Further, according to the invention, the relying parties are configured to keep a list of potential recommenders that includes OpenID providers it had an interaction with in the past. A relying party's list of potential recommenders may include either all OpenID providers it had an interaction with in the past or, more preferably, a predefined number of the most recent OpenID providers it had an interaction with in the past (and which therefore might have recommendations/opinions to provide about such relying parties).

The reputation-based enhancement of the invention allows an end-user to make smarter selections when deciding whether to interact or not with a given relying party (requesting certain user's identity information in order to provide the service), avoiding this way malicious or fraudulent ones. A reputation system integrated with authentication providers according to the invention allows users to rate any visited service on the fly, instead of relying on a centralized authority where services have to be a priori registered.

In this regard it is important to note that the solution according to the present invention is in strong contrast to current reputation management solutions in the Internet which are mostly centralized systems, like for example http://www.qype.co.uk/de125-heidelberg/tag/pizza. The main problem with this approach is the fact that the services have to register a priori with the centralized reputation server in order to participate in the mechanism. Besides being a cumbersome business process, such solution might suffer scalability issues since all the information is stored on a central place.

Although the present invention is generally applicable in connection with any single sign-on mechanism, hereinafter reference is mostly made to OpenID as best-known and widest-spread representative, however, without restricting the invention to this specific implementation.

According to possible embodiments a distributed collection of recommendation information from trusted third parties (authentication entities) may be performed by either using an intermediate aggregator, a publish/notification mechanism, or a fully distributed queries mechanism. For instance, OpenID providers could collect recommendations about a relying party from an intermediate aggregator where the users could send their feedbacks/recommendations about the services they used, which means that the intermediate aggregator is configured to receive feedback/recommendation information from users. Alternatively, OpenID providers may be configured to directly query other OpenID providers in order to find out who has recommendations about the targeted relying party.

In one embodiment it may be provided that, when one of the end users of an OpenID provider wants to access a certain relying party for the first time (i.e. the OpenID provider has never had any transaction with such relying party in the past), then the OpenID provider sends a subscription request to that relying party. Upon subscription, the relying party may provide the list of potential recommenders to the respective OpenID provider. Furthermore, it may be provided that a relying party notifies all the OpenID providers subscribed to it when the list of potential recommenders is updated.

In order to collect distributed recommendation information an OpenID provider may ask all OpenID providers that are contained in the list of potential recommenders it received from a relying party about recommendations with respect to that relying party. According to a preferred embodiment, in order to provide customized and user-tailored reputation information, queries for recommendations may include preferences of the user related to the requested service (e.g. with respect to price, quality of service, delivery time, etc.).

In order to prevent certain attacks, OpenID providers may be configured to only deliver recommendation values to those other OpenID providers belonging to their circle of trust.

According to a preferred embodiment an OpenID provider may calculate a reputation score of a relying party based on collected and aggregated recommendations about that relying party by means of a reputation calculation engine. With respect to providing high flexibility, the reputation calculation engine may be configured to support different reputation computational models that can be interchangeably selected in order to adapt to different scenarios.

In order to reduce the computation time to provide recommendations and prevent scalability issues, the reputation framework may be designed with a caching approach for the reputation store component. The idea is to give reputation information to the users based on the previously computed reputation values (cached values), so that the reputation calculation engine is triggered to calculate an updated reputation score for a relying party only in case a change in the number of recommendations available at an OpenID provider about said relying party exceeds a predefined threshold.

According to another preferred embodiment the calculation of a reputation score of a relying party may be performed by including one or more weight factors for treating recommendations received from different OpenID providers individually. For instance, a weight factor may represent how much an OpenID provider trusts the information given by other OpenID providers. Additionally or alternatively, recommendations may be given different weights depending on how much the preferences of the user who has provided the recommendation match with the preferences of the querying user.

In order to enrich the system and to enlarge the available information, a feedback mechanism may be implemented that allows users to rate internet services after interacting with them and to provide OpenID providers with recommendations about relying parties offering the services.

There are several ways how to design and further develop the teaching of the present invention in an advantageous way. To this end it is to be referred to the patent claims subordinate to independent patent claims 1 and 15 on the one hand and to the following explanation of preferred embodiments of the invention by way of example, illustrated by the figure on the other hand. In connection with the explanation of the preferred embodiments of the invention by the aid of the figure, generally preferred embodiments and further developments of the teaching will we explained. In the drawing

Fig. 1    is a schematic illustration of a generic OpenID system,

Fig. 2    is a diagram illustrating an OpenID sequence according to prior art,

Fig. 3    is a diagram illustrating a reputation-enhanced OpenID sequence according to an embodiment of the invention,

Fig. 4    is a schematic view illustrating a dynamically interchangeable reputation computation engine according to an embodiment of the invention,

Fig. 5    is a schematic view illustrating a reputation-enhanced OpenID system according to an embodiment of the invention, and

Fig. 6    is a diagram illustrating a sampling mechanism for transactions according to an embodiment of the invention.

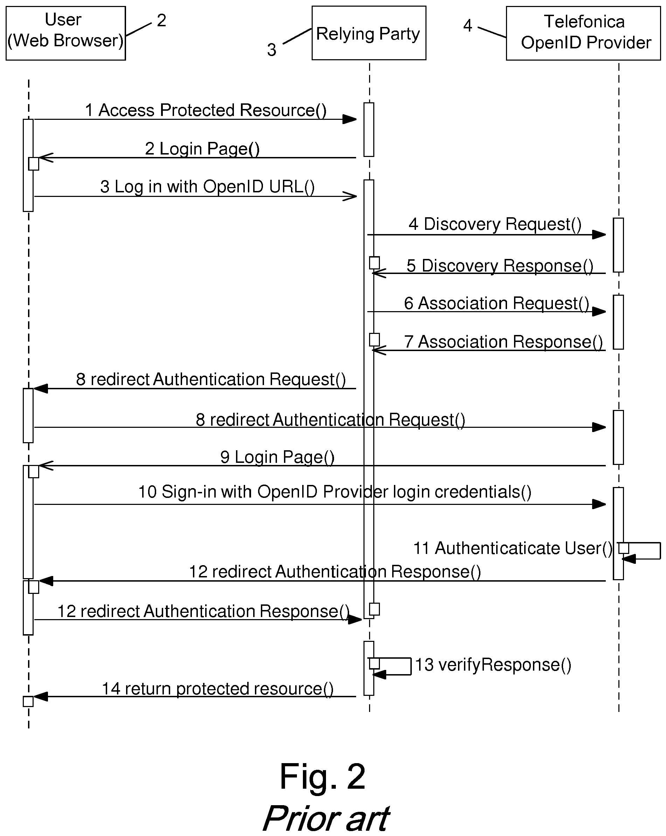

Fig. 2 shows a sequence diagram of the OpenID protocol according to prior art. In accordance with the general concept of single sign-in solutions, when a user 2 accesses a relying party 3, for instance since he wishes to consume a specific service offered by that relying party 3, the authentication of the user's 2 identity is performed by an OpenID provider 4 acting on behalf of the user 2. When the relying party 3 sends an authentication request to the OpenID provider 4 (as indicated in step 8 of Fig. 2) some implementations will then ask whether the user 2 trusts the relying party's 3 web site URL. Therefore, at the point the relying party 3 sends the authentication request, the user can decide to confirm or reject the request. If the user trusts the relying party 3 it will be redirected to its URL. If not, the next step is the cancelation of the process.

Most OpenID providers today already allow their users to store their decision about the trustworthiness of the relying parties that they visit. The problem here is that the decision to trust the relying party or not is completely left to the user, without any further information. Therefore, it would be very desirable to provide users with a mechanism by means of which the overall reputation of every relying party could be calculated with the aim of assisting such end-users when deciding whether to interact or not with those relying parties. In other words, a reputation-based enhancement of the OpenID protocol would allow the users to make more accurate decisions, improving this way the global security of the system.

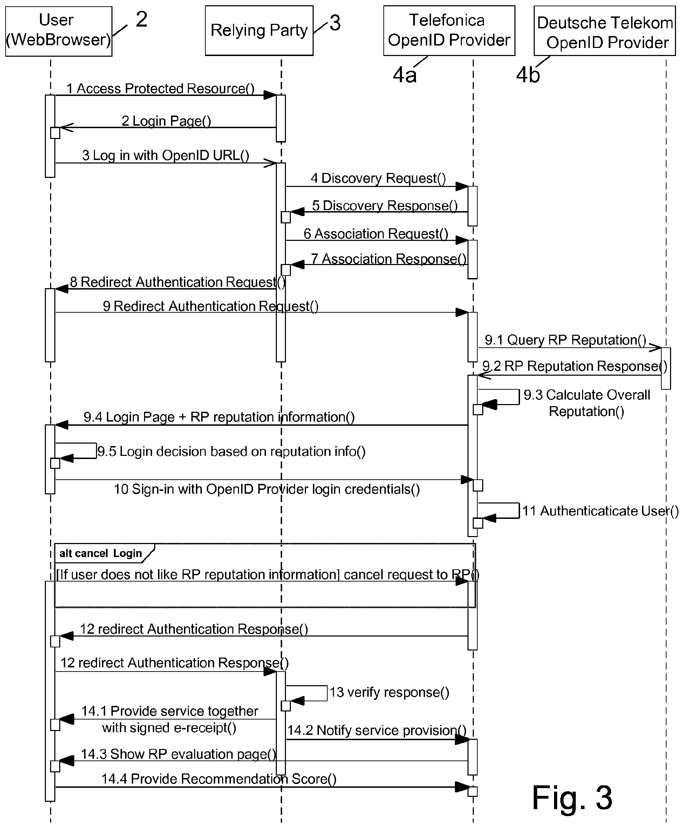

An embodiment of a reputation-based enhancement of the OpenID protocol in accordance with the present invention is illustrated in Fig. 3. The involved entities are basically the same as in Fig. 2, and include a user 2, a relying party RP 3, a first OpenID provider OP 4a (Telefonica) and a second OpenID provider OP 4b (Deutsche Telekom). As it can be observed in Fig. 3, the sequence diagram shows an enhanced flow mechanism of an OpenID based SSO (single sign-on) system.

Since a skilled person is completely familiar with steps 1-8, including the login of the user 2 at RP 3 and the discovery and association procedure between RP 3 and the Telefonica OP 4a, which are known from prior art and which are identical to the respective steps of Fig. 2, a detailed description of these steps is omitted.

The main goal of the reputation framework is depicted in step 9.4 of the sequence diagram. In this particular step, the framework gives the user 2 of such a system the possibility to receive reputation information about the relying party 3 that he/she is accessing.

The first issue to solve in connection with the embodiment of Fig. 3, when the Telefonica OP 4a wants to compute a reputation of RP 3, is to find those other OpenID providers that might have information (i.e., recommendations) about that specific RP 3. To this end, the embodiment illustrated in Fig. 3 implements a subscription/notification mechanism working in the following way:

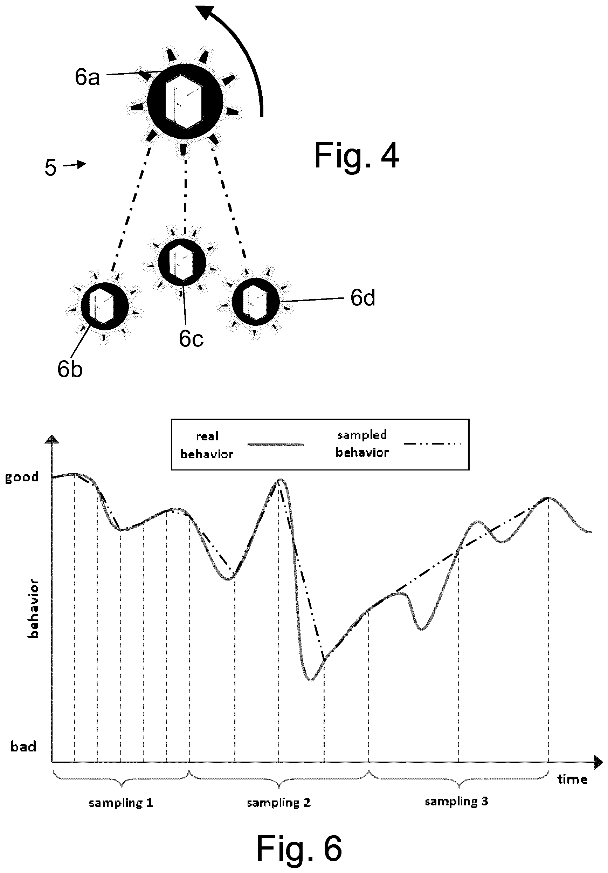

When one of the end users of an OP wants to access a certain RP for the first time - which means that the OP has never had any transaction with that particular RP in the past - then the OP sends a subscription request to that RP. Every RP keeps a list with the most recent OPs that have had an interaction with each of them (and therefore might have recommendations/opinions to provide about such RPs). Thus, the RP will notify all the OP providers subscribed to it when this list of potential recommenders is updated. Further details of this mechanism will be explained below in connection with Fig. 4.

Once the Telefonica OP 4a knows which other OpenID providers might have recommendations about RP 3, it has to query them for such information (step 9.1 in Fig. 3). For the purpose of clarity, in Fig. 3 only a single OpenID provider - Deutsche Telekom OP 4b - is depicted, which possesses recommendations about RP 3. However, as will be appreciated by a person skilled in the art, in real application scenarios there will be typically a higher number of OpenID providers that contribute to the recommendation information collection. As can be further obtained from Fig. 3, in step 9.2 OP 4b transmits its reputation response about RP 3 to OP 4a. Based on the results received from all answering OpenID providers, OP 4a calculates an overall reputation value/score for RP 3 by means of its reputation computation engine (step 9.3), which is then shown to the user 2 together with the login page (step 9.4). As indicated in step 9.5, the user can then make a smart login decision based on the received reputation information about RP 3. In case the user decides to trust the RP according to its reputation, such RP is authorized to access the user's identity information stored in OP 4a required in order to actually provide the service.

Then, the service is actually provided by RP 3 to the end-user 2 (step 14.1). Finally, the last step includes a feedback mechanism in which the user 2 provides his/her final recommendation about the service received from the RP 3. After a notification from RP 3 (or, alternatively, an e-mail to the user 2 from OP 4a), the Telefonica OP 4a shows a page to the user 2 for introducing his/her satisfaction with the service provision made by RP 3 (step 14.3).

In order to reduce the computation time to provide those recommendations and prevent scalability issues, the reputation framework is designed with a caching approach for storing reputation scores. According to this approach reputation information is given to the users based on the previously computed reputation values (cached values), so that only if there are many changes in the number of recommendation scores to a certain RP, the calculation engine of an OpenID provider would be triggered to calculate a new reputation value for such RP.

In case the cached reputation value is too old, or many new recommendations have been provided, OP 4a has to actually query other OpenID providers for recommendations regarding the specified RP 3. Nevertheless, OP 4a should additionally consider that other OpenID providers might deliver an erroneous feedback, either because they are acting maliciously, because its users give false feedback, or due to errors when answering the recommendation query.

Therefore, according to one embodiment, when querying the OpenID providers, the queerer - OP 4a in Fig. 3 - provides a weight factor, $\omega_{OP_i}$, representing how much it can trust the information given by the other OpenID providers. Depending on this weight factor, the OpenID providers can treat recommendation information more or less relevant for the overall calculation of the relying party reputation.

The weight factor $\omega_{OP_i}$ could be calculated based on the difference between the end-users' final satisfaction $Sat_{user}$ with the received service and the aggregated recommendation provided by each OpenID provider:

$$\omega_{OP_i} = f(Sat_{user}, Rec_{OP_i}(RP))$$

Moreover, in order to provide customized and user-tailored reputation information, each query for recommendations may come with the preferences of the end-user (in an anonymous way) related to the provision of the final service (with regard to price, quality of service, delivery time, etc). Thus, a higher weight $\left(\omega_{user, U_{OP_{i,j}}}\right)$ will be given to those recommendations $\left(Rec_{U_{OP_{i,j}}}(RP)\right)$ coming from a user whose service preferences match with the end-user ones, since both share predilections or priorities and therefore the opinions of the former are very valuable for the latter.

$$\omega_{user, U_{OP_{i,j}}} = g(Pref_{user}, Pref_{U_{OP_{i,j}}})$$

Once OP 4a receives all the recommendation information from other OpenID providers (step 9.2 in Fig. 3), it has to aggregate it properly in order to compute the final reputation value for the relying party $Rep_{Telefonica\ OP}(RP)$. This reputation computation component of the framework should take several elements into account when calculating such score, namely: the recommendations of other end-users belonging to other OpenID providers $\left(Rec_{U_{OP_{i,j}}}(RP)\right)$, the weight given to each of those recommendations based on the matching of users' preferences $\left(\omega_{user,U_{OP_{i,j}}}\right)$, and the weight associated to each OP, measuring the reliability of its recommendations ($\omega_{0P_i}$).

$$Rep_{Telefonica\,OP}(RP) = h(\omega_{OP_i}, \omega_{user,U_{OP_{i,j}}}, Rec_{U_{OP_{i,j}}}(RP))$$

As an example of a possible generic definition of function *h* in order to compute reputation scores, one can consider the following one:

$$Rep_{Telefonica\,OP}(RP) = \oplus_i \left( \omega_{OP_i} \otimes \left( \oplus_j \left( \omega_{user,U_{OP_{i,j}}} \odot Rec_{U_{OP_{i,j}}}(RP) \right) \right) \right)$$

where $\oplus$ is an aggregation operation, and $\otimes$ and $\odot$ are multiplicative operations that should be all specified.

Fig. 4 schematically illustrates an embodiment of a dynamically interchangeable reputation computation engine 5 to be implemented in authentication entities like e.g. OpenID providers of a user authentication system in accordance with the present invention. Despite the specific example of reputation computation given above, according to the embodiment shown in Fig. 4 the reputation calculation engine 5 of authentication entities is designed in a way that it can support multiple reputation computational models 6, which apply for the reputation score calculation different algorithms or at least different parameter settings (e.g. different weight factors). Those computation models could be exchanged easily so that the system can adapt to different scenarios on the fly, based on current conditions or circumstances (computation or network resources, storage resources, number of feedbacks, etc), as schematically illustrated in Fig. 4. In Fig. 4, the reputation computation engine 5 currently employs reputation computational models 6a, and it may switch to alternative reputation computational models 6b, 6c or 6d.

Moreover, such pluggable reputation computation engine allows the system to be adapted for each end-user individually. For example, a user could choose different models of calculating the final reputation score for a relying party. As an additional service it could be provided that the user is informed about the advantages and/or disadvantages of each reputation computation model.

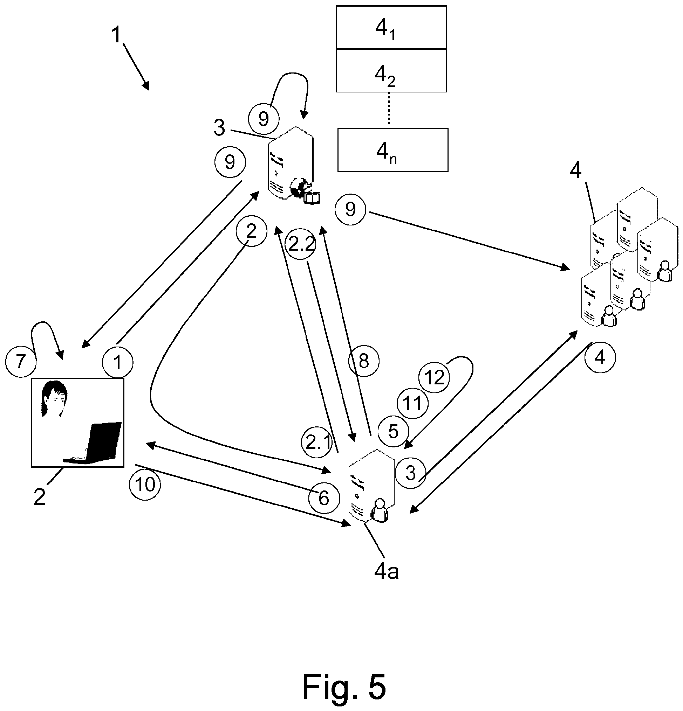

Fig. 5 schematically illustrates an OpenID system 1 according to an embodiment of the present invention. As illustrated in step 1), a user 2, hereinafter referred to as Alice, wants to watch a film offered by a particular relying party 3. Upon receiving a respective access request from Alice, the relying party 3 redirects Alice to an OpenID provider 4a in order to log-in and therefore share her Open ID with relying party 3, as illustrated in step 2). If OpenID provider 4a is not yet subscribed to relying party 3, OpenID provider 4a sends a subscription request to RP1, step 2.1). As a response, in step 2.2), relying party 3 replies with a list including those OpenID providers 4 (OP $4_1$, $4_2$, ..., $4_n$) relying party 3 had interacted with in the past.

As a result, OpenID provider 4a now has a list of other OpenID providers 4 that have already interacted with relying party 3 before, either because OpenID provider 4a was previously subscribed to relying party 3 and already got it, or because it was obtained in step 2.2), as described above. Based on the list, in step 3), OpenID provider 4a sends a request to those OpenID providers 4 included in the list, either to all of them or to a specific subset, asking for their respective recommendations about relying party 3. Additionally, in the illustrated embodiment it sends "anonymously" the preferences of the end-user 2 (Alice in this example). In step 4), each queried OpenID provider 4 replies with a tailored recommendation based on the received preferences of the end-user 2.

In step 5), OpenID provider 4a collects and aggregates all the received recommendations and, in step 6), it applies a selected reputation computation model to the aggregated recommendations in order to calculate a final reputation score about relying party 3, which it then provides to Alice.

In step 7), based on the reputation score received from OpenID provider 4a, Alice decides whether to trust relying party 3 and go on with the process, or finish/cancel here the whole transaction due to insufficient trustworthiness. If Alice trusts relying party 3, then her profile is shared and sent from OpenID provider 4a to relying party 3 (step 8)), where she is now logged-in. As a result, in step 9), relying party 3 provides the requested service to Alice. Furthermore, relying party 3 also updates its list of recommenders by including OpenID provider 4a. Still further, if applicable, relying party 3 notifies the OpenID providers 4 subscribed to it with the updated list of recommenders.

In step 10), Alice assesses her satisfaction with the service received from relying party 3, and she provides a recommendation about relying party 3 in her OpenID provider 4a. Upon receiving the recommendation, OpenID provider 4a updates its data base of recommendations about relying party 3 (step 11)), and updates its reliability weights associated to other OpenID providers 4.

Fig. 6 is a diagram illustrating a sampling mechanism for transactions according to an embodiment of the invention. In this context, the term 'transaction' refers to the whole process of a user requesting a service to a RP, an OP providing reputation information about such RP to the user and, eventually, authenticating the user, the RP providing the requested service to the user and, finally, the user rating (providing feedback) regarding the received service from the RP. As for the term 'behavior', as employed on the ordinate of the diagram, in some scenarios it indicates whether a RP provides the service it actually offers ("normal behavior"), a service of a lower quality than expected ("bad behavior"), or a service of a higher quality than expected ("good behavior"). In some other scenarios, the term 'behavior' indicates whether the RP missuses ("bad behavior") the personal attributes (e-mail, credit card, etc) obtained from the user through the OP, or not ("good behavior") and to what extent.

In those scenarios where the number of transactions is highly frequent, it might not be feasible to track all of them, especially if there are limited or constrained resources. For those specific cases, a sampling mechanism as shown in Fig. 6 could be implemented. This mechanism may consist of not recording absolutely all the transactions performed, but a sample of them. Obviously, here one faces a trade-off between scalability and accuracy, since the more frequent the sampling, the more accurate is the reputation calculation, and vice versa.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

**Claims**

1. Method for performing single sign-in user authentication, comprising:

   a number of relying parties (3) that offer particular services,
   users (2) being enabled to request access to a service offered by a relying party (3), and
   a number of authentication entities performing authentication of a user's (2) identity towards a relying party (3), wherein said authentication entities provide the user (2), within the framework of an authentication process towards said relying party (3), with reputation information about said relying party (3),

   **characterized in that** said relying party (3) keeps a list of potential recommenders that includes authentication entities said relying party (3) had an interaction with in the past, wherein said relying party (3) provides said list of potential recommenders to authentication entities.

2. Method according to claim 1, wherein said authentication entities collect recommendations about said relying party (3) from an intermediate aggregator that is configured to receive said recommendations from users (2).

3. Method according to claim 1 or 2, wherein said authentication entities query each other directly for recommendations about said relying party (3).

4. Method according to any of claims 1 to 3, wherein said relying party's (3) list of potential recommenders includes a predefined number of the most recent authentication entities it had an interaction with in the past.

5. Method according to any of claims 1 to 4, wherein said relying party (3) provides said list of potential recommenders to an authentication entity upon said authentication entity having its first transaction with said relying party (3).

6. Method according to any of claims 1 to 5, wherein an authentication entity, upon performing a transaction with said relying party (3) for the first time, transmits a subscription request to said relying party (3), and/or wherein said relying party (3) notifies all authentication entities subscribed to it about updates of its list of potential recommenders.

7. Method according to any of claims 1 to 6, wherein an authentication entity asks all or a subset of authentication entities that are contained in said list of potential recommenders it received from said relying party (3) about recommendations with respect to said relying party (3), wherein queries for recommendations preferably include preferences of the user (2) related to the requested service.

8. Method according to any of claims 1 to 7, wherein an authentication entity delivers recommendations about said relying party (3) only to other authentication entities that belong to its circle of trust, and/or
wherein an authentication entity calculates a reputation score about said relying party (3) based on collected and aggregated recommendations about said relying party (3).

9. Method according to any of claims 1 to 8, wherein a number of different reputation computational models are provided and wherein an authentication entity, in order to calculate a reputation score about said relying party (3), applies a specific reputation computational model selected from said number of different reputation computational models, and/or
wherein the calculation of a reputation score about said relying party (3) includes one or more weight factors, preferably for treating recommendations received from different authentication entities individually.

10. System for performing single sign-in user authentication, comprising:

a number of relying parties (3) that offer particular services,
users (2) being enabled to request access to a service offered by a relying party (3), and
a number of authentication entities performing authentication of a user's (2) identity towards said relying party (3),
wherein said authentication entities are configured to provide the user (2),

within the framework of an authentication process towards said relying party (3), with reputation information about said relying party (3),
**characterized in that** said relying party (3) is configured to keep a list of potential recommenders that includes authentication entities said relying party (3) had an interaction with in the past, wherein said relying party (3) is configured to provide said list of potential recommenders to authentication entities.

11. System according to claim 10, wherein said authentication entities are configured to collect recommendations about said relying party (3) from an intermediate aggregator that is configured to receive said recommendations from users (2), and/or
wherein said authentication entities are configured to query each other directly for recommendations about said relying party (3).

12. System according to claim 10 or 11, wherein said authentication entities comprise a reputation calculation engine that is configured to calculate a reputation score about said relying party (3) based on collected and aggregated recommendations about said relying party (3),
wherein said reputation calculation engine is preferably configured to support different reputation computational models.

13. System according to any of claims 10 to 12, wherein said authentication entities comprise a caching component for caching reputation scores.

14. System according to any of claims 10 to 13, wherein said reputation calculation engine is triggered to calculate an updated reputation score about said relying party (3) in case a change in the number of recommendations available at an authentication entity about said relying party (3) exceeds a predefined threshold.

15. System according to any of claims 10 to 14, comprising a feedback mechanism enabling users to provide authentication entities with recommendations about relying parties (3), and/or
wherein said authentication entities include OpenID providers (4).

**Patentansprüche**

1. Verfahren zur Durchführung einer Benutzerauthentifizierung mit einmaliger Anmeldung, umfassend:

eine Anzahl von vertrauenden Parteien (3), die bestimmte Dienstleistungen anbieten,
Nutzer (2), die Zugriff auf einen von einer vertrauenden Partei (3) angebotenen Dienst anfordern können, und
eine Anzahl von Authentifizierungseinheiten, die eine Authentifizierung der Identität eines Nutzers (2) gegenüber einer vertrauenden Partei (3) durchführen,
wobei die Authentifizierungseinheiten dem Nutzer (2) im Rahmen eines Authentifizierungsprozesses gegenüber der vertrauenden Partei (3) Reputationsinformationen über die vertrauende Partei (3) bereitstellen,

**dadurch gekennzeichnet, dass** die vertrauende Partei (3) eine Liste potentieller Empfehlungsgeber führt, die Authentifizierungseinheiten enthält, mit denen die vertrauende Partei (3) in der Vergangenheit interagiert hat, wobei die vertrauende Partei (3) Authentifizierungseinheiten die Liste potentieller Empfehlungsgeber bereitstellt.

2. Verfahren nach Anspruch 1, wobei die Authentifizierungseinheiten Empfehlungen über die vertrauende Partei (3) von einem intermediären Aggregator sammeln, der konfiguriert ist, die Empfehlungen von Nutzern (2) zu empfangen.

3. Verfahren nach Anspruch 1 oder 2, wobei die Authentifizierungseinheiten sich gegenseitig direkt bezüglich Empfehlungen über die vertrauende Partei (3) anfragen.

4. Verfahren nach einem der Ansprüche 1 bis 3, wobei die Liste potentieller Empfehlungsgeber der vertrauenden Partei (3) eine vordefinierte Anzahl der jüngsten Authentifizierungseinheiten enthält, mit denen sie in der Vergangenheit interagiert hat.

5. Verfahren nach einem der Ansprüche 1 bis 4, wobei die vertrauende Partei (3) einer Authentifizierungseinheit die Liste potentieller Empfehlungsgeber bereitstellt, sobald die Authentifizierungseinheit ihre erste Transaktion mit der vertrauenden Partei (3) hat.

6. Verfahren nach einem der Ansprüche 1 bis 5, wobei eine Authentifizierungseinheit beim erstmaligen Ausführen einer Transaktion mit der vertrauenden Partei (3) eine Subskriptionsanfrage an die vertrauende Partei (3) übermittelt, und/oder
wobei die vertrauende Partei (3) alle Authentifizierungseinheiten, die bei ihr registriert sind, über Aktualisierungen ihrer Liste potentieller Empfehlungsgeber benachrichtigt.

7. Verfahren nach einem der Ansprüche 1 bis 6, wobei eine Authentifizierungseinheit alle Authentifizierungseinheiten oder eine Teilmenge von Authentifizierungseinheiten, die in der Liste potentieller Empfehlungsgeber enthalten sind, die sie von der vertrauenden Partei (3) erhalten hat, nach Empfehlungen in Bezug auf die vertrauende Partei (3) fragt, wobei Anfragen für Empfehlungen vorzugsweise Präferenzen des Nutzers (2) bezogen auf den angefragten Dienst umfassen.

8. Verfahren nach einem der Ansprüche 1 bis 7, wobei eine Authentifizierungseinheit Empfehlungen über die vertrauende Partei (3) nur an andere Authentifizierungseinheiten übermittelt, die zu ihrem Vertrauenskreis gehören, und/oder
wobei eine Authentifizierungseinheit basierend auf gesammelten und aggregierten Empfehlungen über die vertrauende Partei (3) eine Reputationsbewertung über die vertrauende Partei (3) berechnet.

9. Verfahren nach einem der Ansprüche 1 bis 8, wobei eine Anzahl unterschiedlicher Reputationsberechnungsmodelle bereitgestellt wird und wobei eine Authentifizierungseinheit, um eine Reputationsbewertung über die vertrauende Partei (3) zu berechnen, ein spezifisches, aus der Anzahl unterschiedlicher Reputationsberechnungsmodelle ausgewähltes Reputationsberechnungsmodell anwendet, und/oder
wobei die Berechnung einer Reputationsbewertung über die vertrauende Partei (3) einen oder mehrere Gewichtungsfaktoren enthält, vorzugsweise zur individuellen Behandlung von Empfehlungen, die von verschiedenen Authentifizierungseinheiten empfangen wurden.

10. System zur Durchführung einer Benutzerauthentifizierung mit einmaliger Anmeldung, umfassend:

   eine Anzahl von vertrauenden Parteien (3), die bestimmte Dienstleistungen anbieten,
   Nutzer (2), die Zugriff auf einen von einer vertrauenden Partei (3) angebotenen Dienst anfordern können, und
   eine Anzahl von Authentifizierungseinheiten, die eine Authentifizierung der Identität eines Nutzers (2) gegenüber der vertrauenden Partei (3) durchführen,
   wobei die Authentifizierungseinheiten so konfiguriert sind, dass sie dem Nutzer (2) im Rahmen eines Authentifizierungsprozesses gegenüber der vertrauenden Partei (3) Reputationsinformationen über die vertrauende Partei (3) bereitstellen,

   **dadurch gekennzeichnet, dass** die vertrauende Partei (3) so konfiguriert ist, dass sie eine Liste potentieller Empfehlungsgeber führt, die Authentifizierungseinheiten enthält, mit denen die vertrauende Partei (3) in der Vergangenheit interagiert hat, wobei die vertrauende Partei (3) konfiguriert ist, Authentifizierungseinheiten die Liste potentieller Empfehlungsgeber bereitzustellen.

11. System nach Anspruch 10, wobei die Authentifizierungseinheiten konfiguriert sind, Empfehlungen über die vertrauende Partei (3) von einem intermediären Aggregator zu sammeln, der konfiguriert ist, die Empfehlungen von Nutzern (2) zu empfangen, und/oder
wobei die Authentifizierungseinheiten so konfiguriert sind, dass sie sich gegenseitig direkt bezüglich Empfehlungen über die vertrauende Partei (3) anfragen.

12. System nach Anspruch 10 oder 11, wobei die Authentifizierungseinheiten eine Reputationsberechnungsmaschine umfassen, die konfiguriert ist, basierend auf gesammelten und aggregierten Empfehlungen über die vertrauende Partei (3) eine Reputationsbewertung über die vertrauende Partei (3) zu berechnen,
wobei die Reputationsberechnungsmaschine vorzugsweise so konfiguriert ist, dass sie unterschiedliche Reputationsberechnungsmodelle unterstützt.

13. System nach einem der Ansprüche 10 bis 12, wobei die Authentifizierungseinheiten eine Zwischenspeicherkomponente zum Zwischenspeichern von Reputationsbewertungen umfassen.

14. System nach einem der Ansprüche 10 bis 13, wobei die Reputationsberechnungsmaschine getriggert wird, eine aktualisierte Reputationsbewertung über die vertrauende Partei (3) zu berechnen, falls eine Änderung der Anzahl von bei einer Authentifizierungseinheit verfügbaren Empfehlungen über die vertrauende Partei (3) einen vordefinierten Schwellenwert überschreitet.

15. System nach einem der Ansprüche 10 bis 14, umfassend einen Feedbackmechanismus, der es Nutzern ermöglicht, Authentifizierungseinheiten Empfehlungen über vertrauende Parteien (3) bereitzustellen, und/oder
wobei die Authentifizierungseinheiten OpenID-Provider (4) umfassen.

**Revendications**

1. Procédé de réalisation d'une authentification d'utilisateur de connexion unique, comprenant :

   un nombre de parties utilisatrices (3) qui offrent des services particuliers,
   des utilisateurs (2) autorisés à demander accès à un service offert par une partie utilisatrice (3), et
   un nombre d'entités d'authentification réalisant une authentification de l'identité d'un utilisateur (2) pour une partie utilisatrice (3),
   dans lequel lesdites entités d'authentification fournissent à l'utilisateur (2), dans le cadre d'un processus d'authentification pour ladite partie utilisatrice (3), des informations de réputation concernant ladite partie utilisatrice (3),
   **caractérisé en ce que** ladite partie utilisatrice (3) conserve une liste de garants potentiels qui comporte des entités d'authentification avec lesquelles ladite partie utilisatrice (3) a eu une interaction par le passé, dans lequel ladite partie utilisatrice (3) fournit ladite liste de garants potentiels à des entités d'authentification.

2. Procédé selon la revendication 1, dans lequel lesdites entités d'authentification recueillent des recommandations concernant ladite partie utilisatrice (3) en provenance d'un agrégateur intermédiaire qui est configuré pour recevoir lesdites recommandations en provenance d'utilisateurs (2).

3. Procédé selon la revendication 1 ou 2, dans lequel lesdites entités d'authentification se demandent l'une à l'autre directement des recommandations concernant ladite partie utilisatrice (3).

4. Procédé selon l'une quelconque des revendications 1 à 3, dans lequel la liste de garants potentiels de ladite partie utilisatrice (3) comporte un nombre prédéfini des entités d'authentification les plus récentes avec lesquelles elle a eu une interaction par le passé.

5. Procédé selon l'une quelconque des revendications 1 à 4, dans lequel ladite partie utilisatrice (3) fournit ladite liste de garants potentiels à une entité d'authentification lorsque ladite entité d'authentification a sa première transaction avec ladite partie utilisatrice (3).

**6.** Procédé selon l'une quelconque des revendications 1 à 5, dans lequel une entité d'authentification, lors de la réalisation d'une transaction avec ladite partie utilisatrice (3) pour la première fois, transmet une demande d'abonnement à ladite partie utilisatrice (3), et/ou dans lequel ladite partie utilisatrice (3) notifie à toutes les entités d'authentification qui lui sont abonnées des mises à jour de sa liste de garants potentiels.

**7.** Procédé selon l'une quelconque des revendications 1 à 6, dans lequel une entité d'authentification demande à toutes les entités d'authentification ou à un sous-ensemble de celles-ci qui sont contenues dans ladite liste de garants potentiels qu'elle a reçue en provenance de ladite partie utilisatrice (3) des recommandations par rapport à ladite partie utilisatrice (3), dans lequel les demandes de recommandations comportent de manière préférée des préférences de l'utilisateur (2) liées au service demandé.

**8.** Procédé selon l'une quelconque des revendications 1 à 7, dans lequel une entité d'authentification délivre des recommandations concernant ladite partie utilisatrice (3) uniquement à d'autres entités d'authentification qui appartiennent à son cercle de confiance, et/ou dans lequel une entité d'authentification calcule un résultat de réputation concernant ladite partie utilisatrice (3) d'après des recommandations recueillies et agrégées concernant ladite partie utilisatrice (3).

**9.** Procédé selon l'une quelconque des revendications 1 à 8, dans lequel un nombre de modèles de calcul informatique de réputation différents sont fournis et dans lequel une entité d'authentification, afin de calculer un résultat de réputation concernant ladite partie utilisatrice (3), applique un modèle de calcul informatique de réputation spécifique sélectionné parmi ledit nombre de modèles de calcul informatique de réputation différents, et/ou dans lequel le calcul d'un résultat de réputation concernant ladite partie utilisatrice (3) comporte un ou plusieurs facteurs de pondération, de manière préférée pour traiter individuellement des recommandations reçues en provenance d'entités d'authentification différentes.

**10.** Système de réalisation d'une authentification d'utilisateur de connexion unique, comprenant :

un nombre de parties utilisatrices (3) qui offrent des services particuliers,
des utilisateurs (2) autorisés à demander accès à un service offert par une partie utilisatrice (3), et
un nombre d'entités d'authentification réalisant une authentification de l'identité d'un utilisateur (2) pour ladite partie utilisatrice (3),
dans lequel lesdites entités d'authentification sont configurées pour fournir à l'utilisateur (2), dans le cadre d'un processus d'authentification pour ladite partie utilisatrice (3), des informations de réputation concernant ladite partie utilisatrice (3),
**caractérisé en ce que** ladite partie utilisatrice (3) est configurée pour conserver une liste de garants potentiels qui comporte des entités d'authentification avec lesquelles ladite partie utilisatrice (3) a eu une interaction par le passé, dans lequel ladite partie utilisatrice (3) est configurée pour fournir ladite liste de garants potentiels à des entités d'authentification.

**11.** Système selon la revendication 10, dans lequel lesdites entités d'authentification sont configurées pour recueillir des recommandations concernant ladite partie utilisatrice (3) auprès d'un agrégateur intermédiaire qui est configuré pour recevoir lesdites recommandations en provenance d'utilisateurs (2), et/ou dans lequel lesdites entités d'authentification sont configurées pour se demander l'une à l'autre directement des recommandations concernant ladite partie utilisatrice (3).

**12.** Système selon la revendication 10 ou 11, dans lequel lesdites entités d'authentification comprennent un moteur de calcul de réputation qui est configuré pour calculer un résultat de réputation concernant ladite partie utilisatrice (3) d'après des recommandations recueillies et agrégées concernant ladite partie utilisatrice (3), dans lequel ledit moteur de calcul de réputation est de manière préférée configuré pour prendre en charge des modèles de calcul informatique de réputation différents.

**13.** Système selon l'une quelconque des revendications 10 à 12, dans lequel lesdites entités d'authentification comprennent un composant de mise en mémoire cache pour mettre en mémoire cache des résultats de réputation.

**14.** Système selon l'une quelconque des revendications 10 à 13, dans lequel ledit moteur de calcul de réputation est déclenché pour calculer un résultat de réputation mis à jour concernant ladite partie utilisatrice (3) dans le cas où un changement du nombre de recommandations disponibles au niveau d'une entité d'authentification concernant ladite partie utilisatrice (3) dépasse un seuil prédéfini.

15. Système selon l'une quelconque des revendications 10 à 14, comprenant un mécanisme de rétroaction autorisant des utilisateurs à fournir des entités d'authentification avec des recommandations concernant des parties utilisatrices (3), et/ou
dans lequel lesdites entités d'authentification comportent des fournisseurs d'OpenID (4).

relying party

OpenID

user

OpenID provider

1

3

4

2

Fig. 1
*Prior art*

Fig. 2
*Prior art*

Fig. 3

Fig. 5

Fig. 4

Fig. 6

**EP 2 724 510 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7831522 B1

- WO 2011050967 A1

**Non-patent literature cited in the description**

- **NAT SAKIMURA.** Coping with Information Asymmetry. *Identity Management Conference, SESSION G: Managing Risk & Reducing Online Fraud Using New Security Technologies,* 20100927

- *OpenID RP Reputation in Trusted Exchange,* 06 June 2008